# EUROPEAN PATENT SPECIFICATION

(11) **EP 3 996 529 B1**
(45) Date of publication and mention of the grant of the patent: **03.12.2025**
(21) Application number: 20742382.3
(22) Date of filing: 08.07.2020
(51) Int. Cl.: A24F 40/57, A24F 40/46, A24F 40/51, A24F 40/10

(54) **AEROSOL PROVISION SYSTEMS**
AEROSOLBEREITSTELLUNGSSYSTEME
SYSTÈMES DE FOURNITURE D'AÉROSOL

(30) Priority: 12.07.2019 GB 201910045
(43) Date of publication of application: 18.05.2022
(73) Proprietor: Nicoventures Trading Limited, London WC2R 3LA (GB)
(72) Inventor: BOHAM, Scott George, London WC2R 3LA (GB)
(74) Representative: D Young & Co LLP
(86) International application number: PCT/GB2020/051641
(87) International publication number: WO 2021/009483

(56) References cited:
- WO-A1-2017/207415
- CN-U- 203 851 801
- US-A1- 2017 325 507
- US-A1- 2017 325 510
- US-A1- 2018 077 967

## Description

### Field

The present disclosure relates to aerosol provision systems such as electronic smoking articles (e.g. electronic nicotine delivery systems) and the like.

### Background

Aerosol provision systems (e.g. e-cigarettes / non-combustible tobacco heating products) generally contain an aerosolisable material, such as a reservoir of a source liquid containing a formulation, typically including nicotine, or a solid material such as a tobacco-based product, from which an aerosol is generated for inhalation by a user, for example through heat vaporisation. Thus, an aerosol provision system will typically comprise an aerosol generation chamber containing a vaporiser, e.g. a heater, arranged to vaporise a portion of aerosolisable material to generate an aerosol in the aerosol generation chamber. As a user inhales on the device and electrical power is supplied to the heater, air is drawn into the device and into the aerosol generation chamber where the air mixes with the vaporised aerosolisable material and forms a condensation aerosol. There is a flow path between the aerosol generation chamber and an opening in the mouthpiece so the air drawn through the aerosol generation chamber continues along the flow path to the mouthpiece opening, carrying some of the condensation aerosol with it, and out through the mouthpiece opening for inhalation by the user.

Some aerosol provision systems include a means for measuring a temperature of a vaporising heater. For example, this can be used to help detect adverse conditions (e.g. overheating if the aerosolisable material is running out) or to provide temperature feedback to help control the temperature of the heater at a desired target temperature. Some aerosol provision systems use a separate temperature sensor for measuring the temperature of the heater while other devices measure an electrical resistance for the heater and use this as an indicator of temperature by taking account of how electrical resistance varies with temperature.

Approaches are described herein which seek to help provide new approaches for measuring temperature in aerosol provision systems.

US2017325507 discloses a temperature monitoring and control device and method for an atomizer heating wire, and an electronic cigarette. The temperature monitoring and control device comprises a temperature signal generation unit and a signal processing unit. The temperature signal generation unit comprises a heating wire, a first end wire and a second end wire; the first and second end wires are made of different conductor materials; when the heating wire generates heat, an electromotive force signal is generated. The signal processing unit is configured for controlling to reduce an atomizing power of the heating wire or turn off a power supply circuit of the heating wire when the current temperature value is greater than or equal to a preset value. US2018077967 discloses an aerosol provision system comprising a thermocouple junction.

### Summary

An aerosol provision system according to the invention is defined in independent claim 1. According to a first aspect of certain embodiments there is provided an aerosol provision system comprising: an electric heater for generating an aerosol from an aerosol generating material for user inhalation, wherein the electric heater comprises a first portion comprising a first electrically resistive material and a second portion comprising a second electrically resistive material which is different from the first electrically resistive material, and wherein the first portion and the second portion are connected together so that the electric heater comprises a thermocouple junction; and control circuitry configured to make measurements of temperature for the electric heater using the thermocouple junction.

According to another aspect of certain embodiments there is provided aerosol provision means comprising: electric heater means for generating an aerosol from an aerosol generating material for user inhalation, wherein the electric heater means comprises a first portion comprising a first electrically resistive material and a second portion comprising a second electrically resistive material which is different from the first electrically resistive material, and wherein the first portion and the second portion are connected together so that the electric heater comprises a thermocouple junction means; and control circuitry means configured to make measurements of temperature for the electric heater means using the thermocouple junction means.

A consumable part according to the invention is defined in independent claim 14.

According to another aspect of certain embodiments there is provided a consumable part for an aerosol provision system comprising: an electric heater for generating an aerosol from an aerosol generating material for user inhalation, wherein the electric heater comprises a first portion comprising a first electrically resistive material and a second portion comprising a second electrically resistive material which is different from the first electrically resistive material, and wherein the first portion and the second portion are connected together so that the electric heater comprises a thermocouple junction.

A control unit for an aerosol provision system comprises: control circuitry configured to make measurements of a temperature of an electric heater for the aerosol provision system comprising thermocouple junction.

A method of operating an aerosol provision system according to the invention is defined in independent claim 15.

According to another aspect of certain embodiments there is provided a method of operating an aerosol provision system comprising: providing an electric heater for generating an aerosol from an aerosol generating material for user inhalation, wherein the electric heater comprises a first portion comprising a first electrically resistive material and a second portion comprising a second electrically resistive material which is different from the first electrically resistive material, and wherein the first portion and the second portion are connected together so that the electric heater comprises a thermocouple junction; and making measurements of temperature for the electric heater using the thermocouple junction. Further respective aspects and features are defined by the appended claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### Brief Description of the Drawings

Embodiments of the invention will now be described, by way of example only, with reference to the accompanying drawings, in which:
Figure 1 schematically represents in cross-section an aerosol provision system in accordance with certain embodiments of the disclosure;
Figures 2, 3 and 5 schematically represent electric heater configurations for an aerosol provision system which do not form part of the invention; Figures 4, 6 and 7 schematically represent electric heater configurations for an aerosol provision system in accordance with certain embodiments of the disclosure; and
Figures 8 and 9 schematically represent certain operating steps for aerosol provision systems in accordance with certain embodiments of the disclosure.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

The present disclosure relates to aerosol provision systems, which may also be referred to as vapour provision systems and electronic smoking systems, such as e-cigarettes and non-combustible tobacco heating products. As is common in the technical field, the terms "aerosol" and "vapour", and related terms such as "aerosolise", "aerosolisable", "aerosoliser" / "vaporise", "vaporisable", "vaporiser" may generally be used interchangeably.

Aerosol provision systems often, though not always, comprise a modular assembly including both a reusable part (also referred to as a control unit) and a replaceable / disposable cartridge part (also referred to as a consumable part). Often the replaceable cartridge part will comprise the aerosolisable material and the vaporiser and the reusable part will comprise the power supply (e.g. rechargeable battery), activation mechanism (e.g. button or puff sensor), and control circuitry. However, it will be appreciated these different parts may also comprise further elements depending on functionality. For example, for a so-called hybrid device the cartridge part may also comprise an additional flavour element, e.g. a portion of tobacco, provided as an insert ("pod") to add flavour to an aerosol generated elsewhere in the system. In such cases the flavour element insert may itself be removable from the disposable cartridge part so it can be replaced separately from the cartridge, for example to change flavour or because the usable lifetime of the flavour element insert is less than the usable lifetime of the aerosol generating components of the cartridge. The reusable device part will often also comprise additional components, such as a user interface for receiving user input and displaying operating status characteristics.

For modular devices a cartridge and control unit are electrically and mechanically coupled together for use, for example using a screw thread, latching or bayonet fixing with appropriately engaging electrical contacts. When the aerosolisable material in a cartridge is exhausted, or the user wishes to switch to a different cartridge having a different aerosolisable material, a cartridge may be removed from the control unit and a replacement cartridge attached in its place. Devices conforming to this type of two-part modular configuration may generally be referred to as two-part devices or multi-part devices.

It is relatively common for aerosol provision systems, including multi-part devices, to have a generally elongate shape and, for the sake of providing a concrete example, certain embodiments of the disclosure described herein will be taken to comprise a generally elongate multi-part device employing disposable cartridges which include an aerosolisable material and electric heater for vaporising the aerosolisable material to form a condensation aerosol for user inhalation during use. However, it will be appreciated the underlying principles described herein may equally be adopted for different configurations of aerosol provision systems, for example single-part devices or modular devices comprising more than two parts, refillable devices and single-use disposable devices, hybrid devices which have an additional flavour element, as well as devices conforming to other overall shapes, for example based on so-called box-mod high performance devices that typically have a more box-like shape or smaller form-factor devices such as so-called pod-mod devices. More generally, it will be appreciated embodiments of the disclosure may be based on aerosol provision systems configured to incorporate the principles described herein regardless of the specific format of other aspects of such aerosol provision systems.

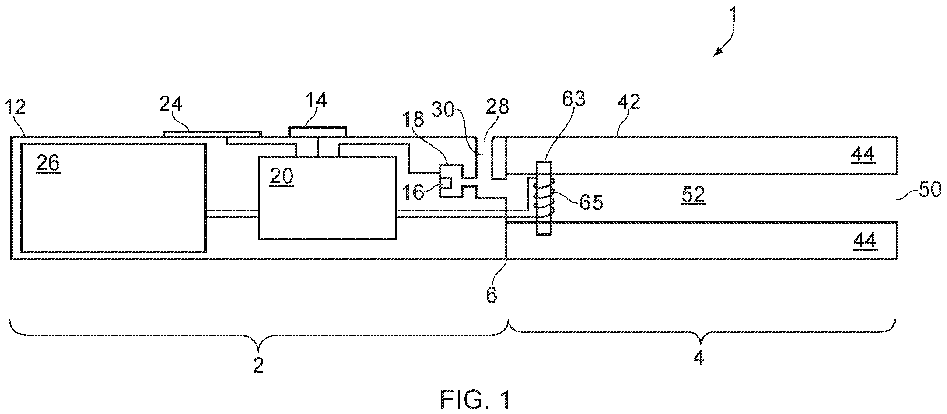

Figure 1 is a cross-sectional view through an example aerosol provision system 1 in accordance with certain embodiments of the disclosure. The aerosol provision system 1 comprises two main components, namely a control unit 2 (which may, for example, also be referred to as a reusable part) and a consumable part 4 (which may, for example, also be referred to as a replaceable / disposable cartridge part).

In normal use the control unit 2 and the consumable part 4 are releasably coupled together at an interface 6. When the consumable part is exhausted or the user simply wishes to switch to a different consumable part, the consumable part may be removed from the control unit and a replacement consumable part attached to the control unit in its place. The interface 6 provides a structural, electrical and air path connection between the two parts and may be established in accordance with conventional techniques, for example based around a screw thread, latch mechanism, or bayonet fixing with appropriately arranged electrical contacts and openings for establishing the electrical connection and air path between the two parts as appropriate. The specific manner by which the consumable part 4 mechanically mounts to the control unit 2 is not significant to the principles described herein, but for the sake of a concrete example is assumed here to comprise a latching mechanism, for example with a portion of the cartridge being received in a corresponding receptacle in the control unit with cooperating latch engaging elements (not represented in Figure 1). It will also be appreciated the interface 6 in some implementations may not support an electrical connection between the respective parts. For example, in some implementations a vaporiser may be provided in the control unit rather than in the consumable part.

The consumable part 4 comprises a consumable housing 42 formed of a plastics material. The consumable housing 42 supports other components of the consumable part and provides the mechanical interface 6 with the control unit 2. The consumable housing 42 in this example is generally circularly symmetric about a longitudinal axis along which the consumable part couples to the control unit 2 and has a length of around 4 cm and a diameter of around 1.5 cm. However, it will be appreciated the specific geometry, and more generally the overall shapes and materials used, may be different in different implementations.

Within the consumable housing 42 is a reservoir 44 that contains liquid aerosolisable material. The liquid aerosolisable material may be conventional, and may be referred to as e-liquid. The liquid reservoir 44 in this example has an annular shape with an outer wall defined by the consumable housing 42 and an inner wall that defines an air path 52 through the consumable part 4. The reservoir 44 is closed at each end with end walls to contain the e-liquid. The reservoir 44 may be formed in accordance with conventional techniques, for example it may comprise a plastics material and be integrally moulded with the consumable housing 42. The opening of the air path 52 at the end of the consumable part 4 provides a mouthpiece outlet 50 for the aerosol provision system through which a user inhales aerosol generated by the aerosol provision system during use.

The consumable part further comprises a wick 63 and a heater (vaporiser) 65 located towards an end of the reservoir 44 opposite to the mouthpiece outlet 50. In this example the wick 63 extends transversely across the cartridge air path 52 with its ends extending into the reservoir 44 of e-liquid through openings in the inner wall of the reservoir 44. The openings in the inner wall of the reservoir are sized to broadly match the dimensions of the wick 63 to provide a reasonable seal against leakage from the liquid reservoir into the cartridge air path without unduly compressing the wick, which may be detrimental to its fluid transfer performance.

The wick 63 and heater 65 are arranged in the cartridge air path 52 such that a region of the cartridge air path 52 around the wick 63 and heater 65 in effect defines a vaporisation region for the consumable part. E-liquid in the reservoir 44 infiltrates the wick 63 through the ends of the wick extending into the reservoir 44 and is drawn along the wick by surface tension / capillary action (i.e. wicking). The heater 65 in this example comprises an electrically resistive wire coiled around the wick 63 and is discussed further below. In this example the wick 63 comprises a glass fibre bundle, but it will be appreciated the specific wick configuration is not significant to the principles described herein. In use electrical power may be supplied to the heater 65 to vaporise an amount of e-liquid (aerosolisable material) drawn to the vicinity of the heater 65 by the wick 63. Vaporised e-liquid may then become entrained in air drawn along the cartridge air path from the vaporisation region to form a condensation aerosol that exits the system through the mouthpiece outlet 50 for user inhalation. Thus electrical power can be applied to the heater 65 to selectively generate aerosol from the e-liquid in the consumable part 4. When the device is in use and generating aerosol, the amount of power supplied to the heater 65 may be varied, for example through pulse width and / or frequency modulation techniques, to control the temperature and / or rate of aerosol generation as desired.

Turning now to the control unit 2, this comprises an outer housing 12 with an opening that defines an air inlet 28 for the aerosol provision system, a battery 26 for providing operating power for the aerosol provision system, control circuitry 20 for controlling and monitoring the operation of the aerosol provision system, a user input button 14, an inhalation sensor (puff detector) 16, which in this example comprises a pressure sensor located in a pressure sensor chamber 18, and a visual display 24. The control circuitry is configured to monitor the output from the inhalation sensor to determine when a user is inhaling through the mouthpiece opening 50 of the aerosol provision system so that power can be automatically supplied to the vaporiser 65 to generate aerosol in response to user inhalation. In other implementations there may not be an inhalation sensor for detecting when a user is inhaling in the device to automatically trigger aerosol generation and instead power may be supplied to the vaporiser in response to a user manually activating a button / switch to trigger aerosol generation.

The outer housing 12 may be formed, for example, from a plastics or metallic material and in this example has a circular cross-section generally conforming to the shape and size of the consumable part 4 so as to provide a smooth transition between the two parts at the interface 6. In this example, the control unit has a length of around 8 cm so the overall length of the aerosol provision system when the consumable part and control unit are coupled together is around 12 cm. However, and as already noted, it will be appreciated that the overall shape and scale of an aerosol provision system implementing an embodiment of the disclosure is not of primary significance to the principles described herein.

The air inlet 28 connects to an air path 30 through the control unit 2. The control unit air path 30 in turn connects to the cartridge air path 52 across the interface 6 when the control unit 2 and consumable part 4 are connected together. The pressure sensor chamber 18 containing the pressure sensor 16 is in fluid communication with the air path 30 in the control unit 2 (i.e. the pressure sensor chamber 18 branches off from the air path 30 in the control unit 2). Thus, when a user inhales on the mouthpiece opening 50, there is a drop in pressure in the pressure sensor chamber 18 that may be detected by the pressure sensor 16 and also air is drawn in through the air inlet 28, along the control unit air path 30, across the interface 6, through the aerosol generation region in the vicinity of the vaporiser 65 (where an aerosol generated from the aerosolisable material becomes entrained in the air flow when the vaporiser is active), along the cartridge air path 52, and out through the mouthpiece opening 50 for user inhalation.

The battery 26 in this example is rechargeable and may be of a conventional type, for example of the kind normally used in aerosol provision systems and other applications requiring provision of relatively high currents over relatively short periods. The battery 26 may be recharged through a charging connector in the control unit housing 12, for example a USB connector.

The user input button 14 in this example is a conventional mechanical button, for example comprising a spring mounted component which may be pressed by a user to establish an electrical contact. In this regard, the input button may be considered to provide a manual input mechanism for the aerosol provision system, but the specific manner in which the button is implemented is not significant. For example, different forms of mechanical button or touch-sensitive button (e.g. based on capacitive or optical sensing techniques) may be used in other implementations. The specific manner in which the button is implemented may, for example, be selected having regard to a desired aesthetic appearance.

The display 24 is provided to give a user a visual indication of various characteristics associated with the aerosol provision system, for example current power and / or temperature setting information, remaining battery power, and so forth. The display may be implemented in various ways. In this example the display 24 comprises a conventional pixilated LCD screen that may be driven to display the desired information in accordance with conventional techniques. In other implementations the display may comprise one or more discrete indicators, for example LEDs, that are arranged to display the desired information, for example through particular colours and / or flash sequences. More generally, the manner in which the display is provided and information is displayed to a user using the display is not significant to the principles described herein. Some embodiments may not include a visual display and may include other means for providing a user with information relating to operating characteristics of the aerosol provision system, for example using audio signalling or haptic feedback, or may not include any means for providing a user with information relating to operating characteristics of the aerosol provision system.

The control circuitry 20 is suitably configured / programmed to control the operation of the aerosol provision system to provide functionality in accordance with embodiments of the disclosure as described further herein, as well as for providing conventional operating functions of the aerosol provision system in line with the established techniques for controlling such devices. The control circuitry (processor circuitry) 20 may be considered to logically comprise various sub-units / circuitry elements associated with different aspects of the aerosol provision system's operation in accordance with the principles described herein and other conventional operating aspects of aerosol provision systems, such as display driving circuitry and user input detection. It will be appreciated the functionality of the control circuitry 20 can be provided in various different ways, for example using one or more suitably programmed programmable computer(s) and / or one or more suitably configured application-specific integrated circuit(s) / circuitry / chip(s) / chipset(s) configured to provide the desired functionality.

As noted above, some aerosol provision systems may include means for measuring a temperature of a heater for vaporising aerosolisable material. Some of these aerosol provision systems may use a separate temperature sensor for measuring the temperature of the heater while others may measure an electrical resistance for the heater and use this to determine its temperature by taking account of how electrical resistance varies with temperature. One drawback of using a separate temperature sensor to measure temperature is increased structural complexity and part count. One drawback of relying on electrical resistance to measure temperature is low sensitivity due to the relatively low temperature coefficient of resistance associated with some materials commonly used for heaters in aerosol provision systems.

In accordance with certain embodiments of the disclosure an aerosol provision system comprises an electric heater which comprises two different materials (in particular materials having different Seebeck coefficients) connected together so the electric heater itself comprises a thermocouple junction. The aerosol provision system may thus include control circuitry comprising conventional thermocouple measurement circuitry (for example incorporating a suitable cold junction) to allow the temperature of the electric heater to be determined from measurements using the thermocouple junction.

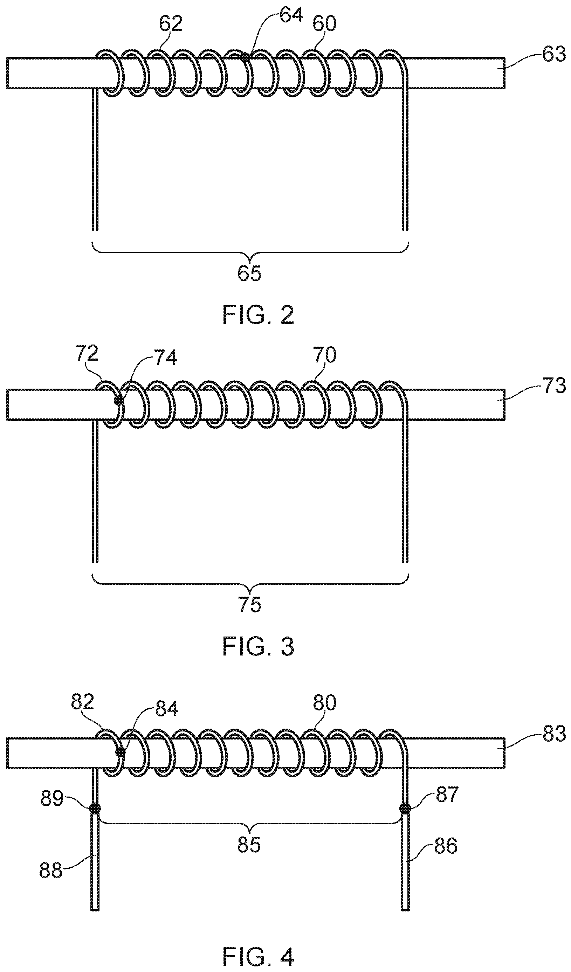

Figure 2 schematically represents the electric heater 65 the aerosol provision system represented in Figure 1 in accordance with certain embodiments of the disclosure in more detail. The electric heater 65 is generally in the form of a wire coil and is wound around the capillary wick 63 (also shown in Figure 2). In this example the wick 63 comprises a linear fibrous capillary wick formed of glass fibre, e.g. of the kind conventionally used in vapour provision systems, but in other examples different forms of capillary wick may be used, for example comprising fibrous cotton or a porous ceramic rod.

The electric heater 65 comprises a first portion 60 comprising a first electrically resistive material connected, e.g. by welding, to a second portion 62 comprising a second electrically resistive material at a junction 64. The first and second portions of the electric heater comprise different materials so that the junction 64 acts as a thermocouple junction. The first and second portions of the electric heater may, for example, comprise different nickel alloys, e.g. the first portion 60 may comprise an alloy of nickel and chromium and the second portion 62 may comprise an alloy of nickel, aluminium, manganese and silicon. In the example represented in Figure 2 the first portion 60 is assumed to comprise an alloy of approximately 90% nickel and 10% chromium (which may be referred to as Chromel) and the second portion 62 is assumed to comprise an alloy of approximately 95% nickel, 2% aluminium, 2% manganese, and 1% silicon (which may be referred to as Alumel). Thus, the electric heater 55 represented in Figure 2 in comprises a Type-K thermocouple junction. A Type K thermocouple junction may be considered particularly appropriate for some aerosol provision system implementations since a Type-K thermocouple junction comprises nickel, and in particular a nickel-chromium alloy, which is a material which is often used for heaters in aerosol provision systems. However, it will be appreciated in other examples the materials may be selected so as to form a different type of thermocouple junction, for example a Type E thermocouple junction; a Type J thermocouple junction; a Type M thermocouple junction; a Type N thermocouple junction; a Type T thermocouple junction; a Type B thermocouple junction; a Type R thermocouple junction; a Type S thermocouple junction; a Type E thermocouple junction; a Type C thermocouple junction; a Type D thermocouple junction; a Type G thermocouple junction; or indeed a non-standard thermocouple junction comprising any combination of materials having different Seebeck coefficients.

It will be appreciated the specific geometry and overall resistance of a heater in accordance with embodiments of the disclosure may be chosen having regard to the implementation at hand, for example having regard to the geometry of a wick 63 and air path 52 for an implementation of the kind shown in Figure 1, and also the desired amount of power to be dissipated in the heater during use and the power supply voltage. For the example schematically shown in Figure 2 it is assumed the heater 65 comprises around 10 turns loosely wound around the wick 63 with an inner diameter of around 2.5 mm and that the thickness of the first and second portions are appropriately chosen so the overall resistance of the electric heating is around 1.3 ohms. However, it will be appreciated different electric heater configuration having different electrical resistance may be used for other implementations, for example in other implementations the electric heater may have an electrical resistance within a range selected from the group comprising: 0.5 to 2 ohms, 0.8 to 1.8 ohms, 0.9 to 1.7 ohms, 1.0 to 1.6 ohms, 1.1 to 1.5 ohms and 1.2 to 1.4 ohms.

Because the electric heater 65 comprises a thermocouple junction it may be used for directly sensing the temperature of the electric heater during use. Thus, the control circuitry 20 for the aerosol provision system includes thermocouple measurement circuitry, including a suitable cold junction, configured to determine a temperature measurement for the electric heater (relative to the cold junction) based on a measured voltage arising from the difference in temperature between the cold junction in the control circuity 20 and the heated junction 64 in the heated zone provided by the heater as a result of the thermocouple effect. The thermocouple measurement circuitry may be based on broadly conventional circuitry for deriving a temperature of a thermocouple junction.

To generate an aerosol using the vapour provision system of Figure 1, electrical power from the battery 26 is supplied to the heater 65 under control of the control circuitry 20. When the aerosol provision system is on, i.e. actively generating an aerosol, power may be supplied to the heater in a pulsed fashion, for examples using a pulse width modulation (PWM) scheme to control the level of power being delivered. Thus, the power supplied to the electric heater during a period of aerosol generation may comprise an alternating sequence of on periods during which power is connected to the electric heater and off periods during power is not connected to the electric heater. The cycle period for the pulse width modulation (i.e. the duration of a neighbouring pair of an off and an on period) is in this example 0.002 s (2 ms) (i.e. the pulse width modulation frequency is 500 hertz). The proportion of each cycle period during which power is being supplied to the heater (i.e. the length of the on period) as a fraction of the cycle period is the so-called duty cycle for the pulse width modulation. In accordance with certain embodiments of the disclosure, the control circuitry of the aerosol provision system may be configured to adjust the duty cycle for the pulse width modulation to vary the power supplied to the heater, for example to achieve a target level of average power or to achieve a target temperature, for example with the duty cycle being controlled in response to feedback from measurements of temperature made by the control circuitry using the thermocouple junction 64.

In accordance with certain embodiments of the disclosure, the control circuitry may be configured to make measurements of temperature for the electric heater using the thermocouple junction during the off periods when power is not being supplied to the electric heater during a period of vapour generation. It has been recognised this can help with providing a measurement of temperature which is less affected by electrical noise or variation in battery level caused by the supply of heating current to the electric heater. Thus, to ensure there is an off period in which measurements of temperature may be made during periods of vapour generation, in accordance with certain embodiments of the disclosure, the duty cycle is limited to a maximum value which is less than unity. For example, in the example of Figure 1 is it assumed the control circuitry is configured so the duty cycle for supplying power to the electric heater is limited to a maximum value of 0.9. This means there will be at least 0.2 milliseconds during each individual PWM cycle period when power is not being supplied to the heater in which a measurement of temperature may be made (typically multiple samples will be taken and an average formed for each measurement). It will be appreciated in other examples different maximum values of the PWM duty cycle may be used, for example in other examples the control circuitry may be configured so that the selected duty cycle for the power supplied to the electric heater during a period of aerosol generation does not exceed a level selected from the group comprising 0.95, 0.90, 0.85, 0.80 and 0.75, for example. In general, an appropriate value for the maximum duty cycle selectable by the control circuitry will depend on the PWM cycle period / frequency and the rate at which the control circuitry is able to make measurements of temperature using the thermocouple junction.

Figure 3 schematically represents an electric heater 75. Aspects of the electric heater 75 represented in Figure 3 which are similar to and will be understood from corresponding aspect of the electric heater 65 represented in Figure 2 are not described again in detail in the interest of brevity. However, the electric heater 75 in Figure 3 differs from the electric heater 65 in Figure 2 in the location of its thermocouple junction. Thus, whereas the first portion 60 and second portion 62 of the heater 65 represented in Figure 2 are of similar lengths so that the thermocouple junction 64 is around the middle of the electric heater (i.e. around the middle of the zone which is heated by the electric heater), the arrangement for the electric heater 75 of Figure 3 is more asymmetric.

Thus the electric heater 75 in Figure 3 is again generally in the form of a wire coil wound around a linear capillary wick 73. The electric heater 75 comprises a first portion 70 comprising a first electrically resistive material connected to a second portion 72 comprising a second electrically resistive material to form a thermocouple junction 74. The first and second portions of the electric heater 75 are of different lengths, and in particular the first portion 70 is longer than the second portion 72, so that the thermocouple junction is located towards one end of the electric heater (i.e. towards one end of the zone which is heated by the electric heater). The relative lengths of the first and second portions of the electric heater may be different in different implementations. For example, in some implementations one of the first and second portions of the electric heater may be longer than the other of the first and second portions of the electric heater by more than a factor selected from the group comprising 2, 3, 4 and 5. Forming the thermocouple junction 74 nearer to one end of the electric heater than the other allows a single material which may be optimised for the purpose of aerosol generation, for example in terms of its resistivity characteristic (e.g. NiChrome), to be responsible for generating the majority of aerosol, while still allowing a thermocouple junction 74 to be formed within the heating zone by using a smaller section of the second material. Apart from this difference in the location of the thermocouple junction within the electric heater, the electric heater 75 schematically represented in Figure 3 might otherwise be the same as, and will be understood from the above description of, the electric heater 65 of Figure 2.

Figure 4 schematically represents an electric heater 85 in accordance with certain other embodiments of the disclosure. Aspects of the electric heater 85 represented in Figure 4 which are similar to and will be understood from corresponding aspect of the electric heater 65 represented in Figure 2 and the electric heater 75 represented in Figure 3 are not described again in detail in the interest of brevity. The electric heater 85 in Figure 4 is similar to the electric heater of Figure 3 in comprising a thermocouple junction 84 which is nearer to one end of the electric heater than the other end. However, the electric heater 85 represented in Figure 4 differs from that represented in Figure 3 in that respective ends of the electric heater's first portion 80 and second portion 82 which are not connected together to form the thermocouple junction 84 are connected to connecting leads 86, 88, for example with respective welded connections 87, 89 in the vicinity of the capillary wick 83. Thus, a first connecting lead 86 is connected to the first portion 80 of the electric heater 85 and a second connecting lead 86 is connected to a second first portion 80 of the electric heater 85. The first connecting lead 86 has an electrical resistance per unit length which is less than the electrical resistance per unit length of the first portion 80 of the electric heater 85 and the second connecting lead 87 has an electrical resistance per unit length which is less than the electrical resistance per unit length of the second portion 82 of the electric heater 85. This arrangement can help reduce the impact of power dissipation in regions where the electric heater is not in close proximity to the capillary wick. The first and second connecting leads may, for example, comprise the same material as the respective first and second portions of the electric heater to which they are connected (for example the lower resistance per unit length may be due to an increased cross section). Alternatively, the first and second connecting leads may comprise materials which are different from the respective first and second portions. In this case the first and second connecting leads may comprise the same material as each other which may be a material having a lower resistivity than the first and / or second portions of the electric heater. Apart from this difference, the electric heater 85 schematically represented in Figure 4 might otherwise be the same as, and will be understood from the above description of, the electric heater 75 of Figure 3.

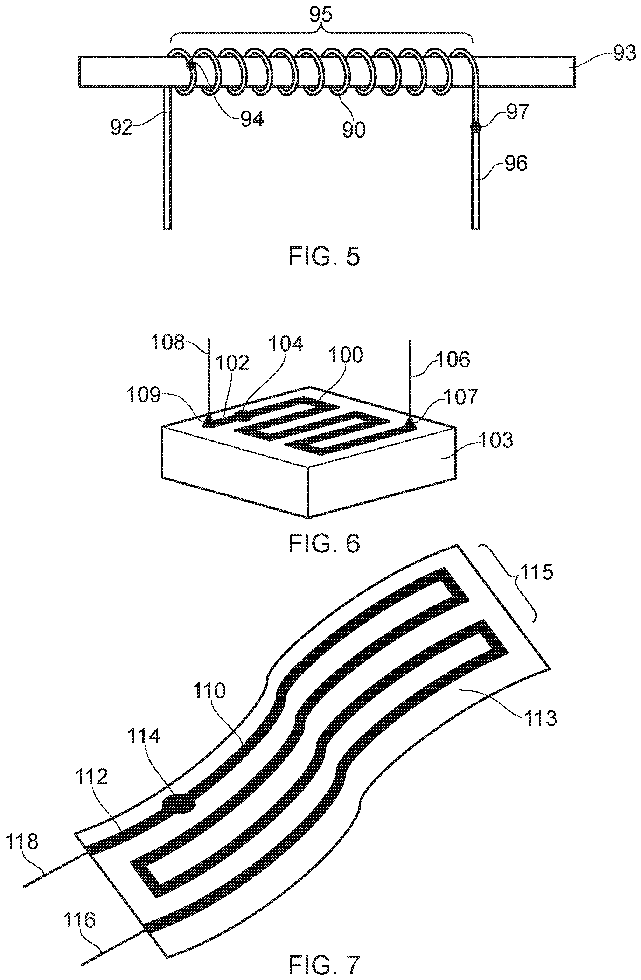

Figure 5 schematically represents an electric heater 95. Aspects of the electric heater 95 represented in Figure 5 which are similar to and will be understood from corresponding aspect of the electric heater 65 represented in Figure 2, the electric heater 75 represented in Figure 3 and the electric heater 85 represented in Figure 4 are not described again in detail in the interest of brevity. The electric heater 95 in Figure 5 is similar to the electric heater of Figure 4 in comprising a thermocouple junction 94 which is nearer to one end of the electric heater than the other end. However, whereas in the example of Figure 4 there is a connecting lead 86, 88 connected to each of the respective first and second portions 80, 82 of the electric heater 85 to provide a section with lower resistance per unit length, the approach of Figure 5 is based on the recognition that the majority of heating is provided by only one of the portions of the electric heater, and so the other portion of the electric heater can itself have a relatively low resistance per unit length so that a separate lower-resistance connecting lead would not be at advantageous as might otherwise be the case in some embodiments of the disclosure. Thus the electric heater 95 in Figure 5 comprises a first portion 90 and second portion 92 which are not connected together to form the thermocouple junction 94. The end of the first portion 92 which is not connected to the second portion 92 is connected to a first connecting lead 96, for example with a welded connection 97 in the vicinity of the capillary wick 93. In accordance with certain embodiments of the disclosure the first connecting lead 96 has an electrical resistance per unit length which is less than the electrical resistance per unit length of the first portion 90 of the electric heater 85. This arrangement can help reduce the impact of power dissipation in regions where the electric heater is not in close proximity to the capillary wick. In this example implementation, the second portion 92 of the electric heater has a lower resistance per unit length than the first portion 80 of the electric heater and does not have a separate connecting lead.

Apart from these differences, the electric heater 95 schematically represented in Figure 5 might otherwise be the same as, and will be understood from the above description of, the electric heater 85 of Figure 4.

Thus, in accordance with certain embodiments of the disclosure an electric heater for an aerosol provision system is provided which comprises a thermocouple junction. The electric heater may be provided in a consumable part of the aerosol provision system. A control unit part of the aerosol provision system to which the consumable part is coupled for use may thus comprise control circuitry configured to measure a temperature of the electric heater using the thermocouple junction.

Whereas in the examples represented in Figures 2, 3, 4 and 5 the electric heater is generally in the form of a coil wound around a wick, it will be appreciated in other implementations that other forms of heater might be used which may still comprise a thermocouple junction used for measuring temperature in accordance with the principles set out above.

For example, Figure 6 shows an electric heater 105 in the form of a resistive trace deposited on a porous ceramic substrate 103 in accordance with certain other embodiments of the disclosure. The porous ceramic substrate 103 may provide a wicking function to draw liquid from a reservoir (not shown) towards the surface of the porous ceramic substrate on which the electric heater 105 is formed for heat vaporisation to form an aerosol. Thus the electric heater 105 is generally in the form of a meandering / zig-zag trace deposited on the ceramic substrate 103, for example using screen printing or any other conventional technique for forming resistive tracks as layers on an electrically insulating substrate.

The electric heater 105 comprises a first portion 100 comprising a first electrically resistive material connected to a second portion 102 comprising a second electrically resistive material to form a junction 104. While the junction 104 is schematically represented in Figure 6 as comprising a region which is wider than the traces comprising the first and second portions of the electric heater, in general the first and second portions may simply be formed on the electrically insulating substrate to overlap one another to form the connection. That is to say, the junction 104 may in practice not be visible. Respective ends of the first and second portions of the electric heater which are not connected together to form the thermocouple junction 104 are connected to the control circuitry by respective connecting leads 106, 108 and connection pads 107, 109 formed on the porous ceramic block 103.

In the same way as described above for the electric heaters in the form of a wire coil represented in Figures 2 to 5, the first and second portions 100, 102 of the electric heater 105 represented in Figure 6 comprise different materials so that the junction 104 acts as a thermocouple junction. Again, the first and second portions of the electric heater may, for example, comprise different nickel alloys, e.g. the first portion 100 may comprise an alloy of nickel and chromium and the second portion 102 may comprise an alloy of nickel, aluminium, manganese and silicon. In general, the materials of the first and second portions of the electric heater 105 represented in Figure 6 may in general be the same as for any of the examples for the materials for the first and second portions of the electric heaters 65, 75, 85 schematically represented in Figures 2 to 5.

It will be appreciated the specific geometry and overall resistance of an electric heater of the kind represented in Figure 6 may be selected having regard to the implementation at hand, for example having regard to the geometry of the ceramic substrate and also the desired amount of power to be dissipated in the electric heater during use and the power supply voltage.

Because the electric heater 105 comprises a thermocouple junction it may be used for directly sensing the temperature of the heater during use in accordance with the principles discussed above.

Figure 7 shows an electric heater 115 in the form of a resistive trace deposited on a flexible electrically insulating polymer substrate 113 in accordance with certain other embodiments of the disclosure. The polymer substrate 113 may, for example, be arranged to surround a solid aerosolisable material, such as a tobacco material, so as to heat the aerosolisable material to form an aerosol. Thus the electric heater 115 is generally in the form of a meandering / zig-zag trace deposited on the flexible substrate 113, for example using screen printing or any other conventional technique for forming resistive tracks on an electrically insulating substrate. Respective ends of the first and second portions of the electric heater which are not connected together to form the thermocouple junction 114 are connected to control circuitry by respective connecting leads 116, 118.

The electric heater 115 comprises a first portion 110 comprising a first electrically resistive material connected to a second portion 112 comprising a second electrically resistive material to form a junction 114. While the junction 114 is schematically represented in Figure 7 as comprising a region which is wider than the traces comprising the first and second portions of the electric heater, in general the first and second portions may simply be formed on the electrically insulating substrate to overlap one another to form the connection. That is to say, the junction 114 may in practice not be visible.

In the same way as described above for the electric heaters in the form of a wire coil represented in Figures 2 to 5 and the electric heater represented in Figure 6, the first and second portions 110, 112 of the electric heater 115 represented in Figure 7 comprise different materials so that the junction 114 acts as a thermocouple junction. Again, the first and second portions of the electric heater may, for example, comprise different nickel alloys, e.g. the first portion 110 may comprise an alloy of nickel and chromium and the second portion 112 may comprise an alloy of nickel, aluminium, manganese and silicon. In general, the materials of the first and second portions of the electric heater 115 represented in Figure 7 may in general be the same as the materials for the first and second portions of any of the electric heaters 65, 75, 85, 95, 105 schematically represented in Figures 2 to 6.

It will be appreciated, as for the other examples, the specific geometry and overall resistance of an electric heater of the kind represented in Figure 7 may be selected having regard to the implementation at hand, for example having regard to the geometry of the ceramic substrate and also the desired amount of power to be dissipated in the electric heater during use and the power supply voltage. Because the electric heater 115 comprises a thermocouple junction it may again be used for directly sensing the temperature of the heater during use in accordance with the principles discussed above.

It will be appreciated the principles described herein may be applied for other forms of electric heater configuration. For example, in a configuration broadly similar to that shown in Figure 7, the electrically insulating substrate may instead be rigid, rather than flexible, so that it may be inserted directly into a solid aerosol forming substrate / aerosolisable material, for example comprising tobacco.

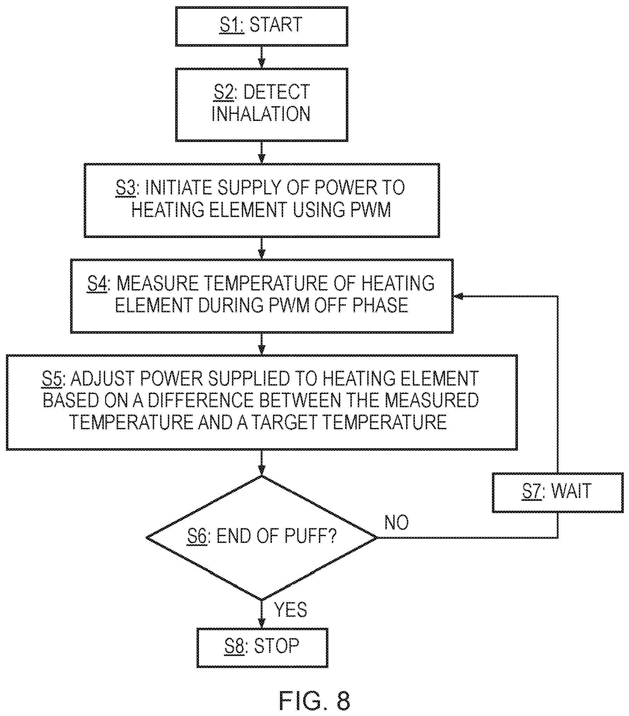

Figure 8 is a flow diagram schematically representing some operating aspects of the aerosol provision system of Figure 1 in accordance with certain embodiments of the disclosure (the operation represented in Figure 8 may be applied for any heater configuration in accordance with embodiments of the disclosure, for example it may be applied for any of the examples represented in Figures 2 to 7).

The processing starts in step S1 in which the aerosol provision system 1 is in a standby state. As is common for aerosol provision systems, the aerosol provision system of Figure 1 supports three basic operating states, namely an "off" state, an "on" state, and a "standby" state.

In the off state, the aerosol provision system is unable to generate aerosol (i.e. the power supply control circuitry is prevented from supplying power to the vaporiser / heater in the off state). The aerosol provision system may, for example, be placed in the off state between use sessions, for example when the aerosol provision system might be set aside or placed in a user's pocket or bag.

In the on (or active) state, the aerosol provision system is actively generating aerosol (i.e. the power supply control circuitry is providing power to the vaporiser / heater, potentially in an on-off pulsed manner using PWM). The aerosol provision system will thus typically be in the on state when a user is in the process of inhaling aerosol from the aerosol provision system.

In the standby state the aerosol provision system is ready to generate aerosol (i.e. ready to apply power to the electric heater) in response to user activation, but is not currently doing so. The aerosol provision system will typically be in the standby state when a user initially exits the off state to begin a session of use (i.e. when a user initially turns on the aerosol provision system), or between uses during an ongoing session of use (i.e. between puffs when the user is using the aerosol provision system). It is more common for aerosol provision systems using liquid aerosolisable material to revert to the standby mode between puffs, whereas for aerosol provision systems using solid aerosolisable material may more often remain on between puffs to seek to maintain the aerosolisable material at a desired temperature during a session of use comprising a series of puffs.

Insofar as is relevant here, the processing represented in Figure 7 is the same regardless of whether the aerosol provision system starts in the standby mode in step S1 because it has just been switched out of the off state to begin a session of use or because it is between puffs during an ongoing session of use. The manner in which the aerosol provision system is caused to switch from the off state to the standby state will be a matter of implementation and is not significant here. For example, to transition from the off state to the standby state the user may be required to press the input button 14 in a particular sequence, for example multiple presses within a predetermined time.

In step S2, while in the standby mode, the control circuitry detects a user is inhaling on the device, for example from an observed drop in pressure indicated by the inhalation sensor 16, or a user activating a button in an aerosol provision system which does not incorporate an inhalation sensor for triggering aerosol generation.

In step S3, in response to the detection of user inhalation in step S2, the control circuitry 20 initiates the supply of power to the heating element using pulse width modulation. The pulse width modulation may, for example, be initially provided at a maximum allowable duty cycle to seek to heat the electric heater to operating temperature as quickly as possible.

As indicated in step S4, the control circuitry is configured to measure the temperature of the heating element using the thermocouple junction formed by the heating element during the PWM off periods, as discussed above.

In step S5 the control circuitry is configured to compare the measured temperature of the heating element with a target temperature to determine if the heating element is at a temperature which is above or below the target temperature. It will be appreciated the target temperature will depend on implementation, for example having regard to the nature of the aerosolisable material to be heated, and furthermore may be different at different times during a session of use. For example, in an aerosol provision system configured to heat a solid aerosolisable material, such as tobacco, a session of use (i.e. a period of heating to generate aerosol) may extend for a number of minutes with different temperatures being targeted at different stages. The control circuitry 20 is configured to adjust the amount of power supplied to the heating element, for example by adjusting the PWM duty cycle, based on the comparison of the measured temperature and the target temperature. For example, if the measured temperature is below the target temperature the duty cycle may be increased (up to a maximum allowed duty cycle such as discussed above), whereas if the measured temperature is above the target temperature, the duty cycle may be reduced, for example potentially to 0.

In step S6 the control circuitry determines whether or not the current session of use (e.g. a user's puff) has ended. This may be based, for example, on detecting when the pressure sensor 16 indicate a user is no longer inhaling on the device, or potentially after a predetermined session time has elapsed.

If it is determined in step S6 that the current session of use has not ended, processing follows the branch marked "No" and there is another iteration through steps S4, S5 and S6, after waiting for a period in step S7. The period of waiting in step S7 defines an iteration cycle period and may be chosen to provide a balance between rapid response and reduced processing load as desired for the application at hand.

If, however, it is determined in step S6 that the current session of use has ended, processing follows the branch marked "Yes" to step S8 and the processing stops.

Thus, the approach of Figure 8 represents a mode of operation in which temperature measurements using the thermocouple junction are used to feedback to the control circuitry to allow the temperature of the electric heater to track a desired target temperature / temperature profile. It will be appreciated the specific feedback control scheme may be based on any established techniques, for example a proportional integral derivative (PID) control scheme may be adopted in which control is based not only on current temperature measurements made using the thermocouple junction, but also measurements from previous iteration cycles.

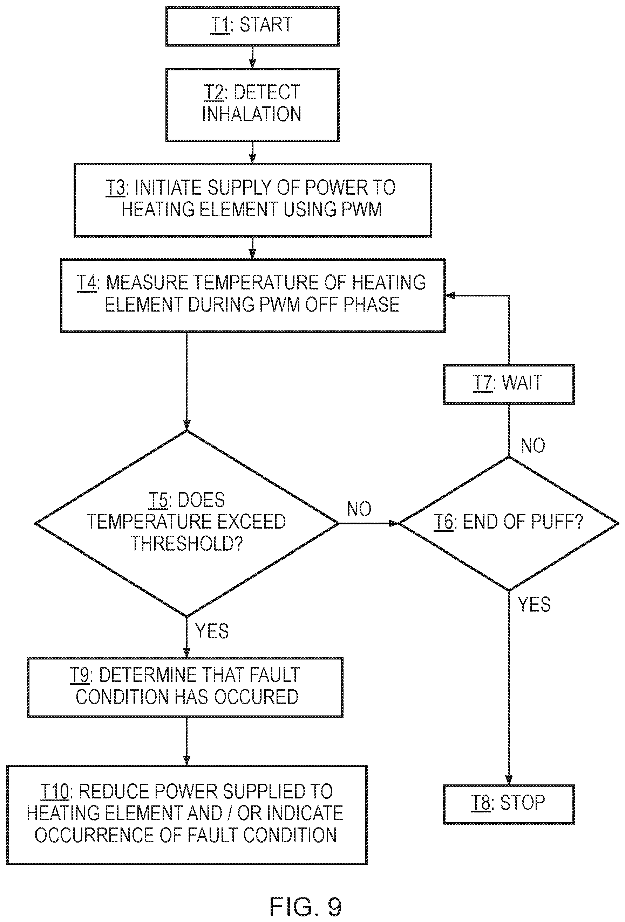

Figure 9 is a flow diagram schematically representing some operating aspects of the aerosol provision system of Figure 1 in accordance with certain other embodiments of the disclosure (the operation represented in Figure 9 may be applied for any heater configuration in accordance with embodiments of the disclosure, for example it may be applied for any of the examples represented in Figures 2 to 7).

Steps T1, T2, T3 and T4 represented in Figure 9 are similar to, and will be understood from, steps S1, S2, S3 and S4 represented in Figure 8 and already discussed above.

In step T5 the control circuitry is configured to compare the measured temperature of the heating element from step T4 with an upper temperature threshold to determine if the temperature of the electric heater (heating element) exceeds the upper temperature threshold. The upper temperature threshold may be selected to correspond with a temperature which is considered to indicate the occurrence of a fault condition, for example the absence of aerosolisable material in the vicinity of the electric heater causing overheating, or over use (e.g. repeated use without allowing sufficient time for the electric heater to cool between sessions). The upper temperature threshold may correspond to a fixed absolute value, for example 300 degrees Celsius, or may be relative to an earlier temperature measurement, for example the upper temperature threshold may be set at a certain percentage above a temperature measured using the thermocouple at the beginning of a session of use before power is supplied to the heater.

If it is determined in step T5 that the temperature does not exceed the upper temperature threshold, processing follows the branch marked "No" to step T6.

In step T6 the control circuitry determines whether or not the current session of use (e.g. a user's puff) hass ended. This may be based, for example, on detecting when the pressure sensor 16 indicate a user is no longer inhaling on the device, or potentially after a predetermined session time has elapsed.

If it is determined in step T6 that the current session of use has not ended, processing follows the branch marked "No" and there is another iteration through steps T4 and T5 after waiting for a period in step T7. The period of waiting in step T7 defines an iteration cycle period and may be chosen to provide a compromise between rapid response and reduced processing load as desired for the application at hand.

If it is determined in step T6 at the current session of use has ended, processing follows the branch marked "Yes" to step T8 of the processing stops.

Returning to step T5, if it is determined that the measured temperature in step T4 exceeds the upper temperature threshold, processing follows the branch marked "Yes" to step T9.

In step T9 it is determined that a fault condition has occurred corresponding to overheating.

In step T10 the control circuitry responds to the determination that a fault condition has occurred, for example by reducing the power supplied to the heating element, e.g. deactivating the supply of power to the heating element, and / or indicating the occurrence of the fault to a user, for example via an indication on the display 24.

Thus, the approach of Figure 9 represents a mode of operation in which temperature measurements using the thermocouple junction may be used to detect when there is an overheating fault condition for the electric heater so the control circuitry can react, for example by reducing the supply of power to the electric heater and / or alerting a user.

It will be appreciated a similar approach to that represented in Figure 9 may be adopted to identify under-temperature fault conditions (e.g. due excess contact resistance in the current path between the battery and the electric heater preventing the electric heater from achieving what is considered to be a minimum operating temperature). In this case the step T5 is in effect replaced with a step in which it is determined whether or not the measured temperature is below a predetermined lower temperature threshold, the lower temperature threshold corresponding to a temperature considered to indicate a fault condition.

Whereas the embodiments discussed above with reference to Figure 1 have to some extent focused on devices having a liquid aerosolisable material, as already noted the same principles may be adopted for devices based on other aerosolisable materials, for example solid materials, such as plant derived materials, such as tobacco derivative materials, or other forms of aerosolisable material, such as gel, paste or foam based aerosolisable materials. Thus, the aerosolisable material may, for example, be in the form of a solid, liquid or gel which may or may not contain nicotine and/or flavourants. In some embodiments, the aerosolisable material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it. In some embodiments, the aerosolisable material may for example comprise from about 50wt%, 60wt% or 70wt% of amorphous solid, to about 90wt%, 95wt% or 100wt% of amorphous solid.

The aerosolisable material (which may also be referred to as aerosol generating material or aerosol precursor material) may in some embodiments comprise a vapour- or aerosol-generating agent or a humectant. Example such agents are glycerine, glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate. A formulation comprising one or more aerosol generating agent(s) may be called an active herein.

Furthermore, and as already noted, it will be appreciated the above-described approaches may be implemented in aerosol provision systems, e.g. electronic smoking articles, having a different overall construction than that represented in Figure 1. For example, the same principles may be adopted in an aerosol provision system which does not comprise a two-part modular construction, but which instead comprises a single-part device, for example a disposable (i.e. non-rechargeable and non-refillable) device. Furthermore, in some implementations of a modular device, the arrangement of components may be different. For example, in some implementations the control unit may also comprise the vaporiser with a replaceable cartridge providing a source of aerosolisable material for the vaporiser to use to generate aerosol.

Furthermore still, in some examples the aerosol provision systems may further include a flavour insert (flavouring element), for example a receptacle (pod) for a portion of tobacco or other material, arranged in the airflow path through the device, for example downstream of the vaporiser, to impart additional flavour to aerosol generated by the vaporiser (i.e. what a hybrid type device).

As used herein, the terms "flavour" and "flavourant", and related terms, refer to materials which, where local regulations permit, may be used to create a desired taste or aroma in a product for adult consumers. The materials may be imitation, synthetic or natural ingredients or blends thereof. The material may be in any suitable form, for example, oil, liquid, or powder.

Thus there has been described an aerosol provision system comprising: an electric heater for generating an aerosol from an aerosol generating material for user inhalation, wherein the electric heater comprises a first portion comprising a first electrically resistive material and a second portion comprising a second electrically resistive material which is different from the first electrically resistive material, and wherein the first portion and the second portion are connected together so that the electric heater comprises a thermocouple junction; and control circuitry configured to make measurements of temperature for the electric heater using the thermocouple junction.

In order to address various issues and advance the art, this disclosure shows by way of illustration various embodiments in which the claimed invention(s) may be practiced. The advantages and features of the disclosure are of a representative sample of embodiments only, and are not exhaustive and / or exclusive. They are presented only to assist in understanding and to teach the claimed invention(s).

## Claims

1. An aerosol provision system (1) comprising:
an electric heater (85,105,115) for generating an aerosol from an aerosol generating material for user inhalation, wherein the electric heater comprises a first portion (80, 10, 110) comprising a first electrically resistive material and a second portion (82, 102, 112) comprising a second electrically resistive material which is different from the first electrically resistive material, and wherein the first portion and the second portion are connected together so that the electric heater comprises a thermocouple junction (84, 104, 114);
control circuitry (20) configured to make measurements of temperature for the electric heater using the thermocouple junction, and
a first connecting lead (86,106,116) connected to the first portion of the electric heater, wherein the first connecting lead has an electrical resistance per unit length which is less than an electrical resistance per unit length of the first portion of the electric heater and a second connecting lead (98,108,118) connected to the second portion of the electric heater, wherein the second connecting lead has an electrical resistance per unit length which is less than an electrical resistance per unit length of the second portion of the electric heater.

2. The aerosol provision system of claim 1, wherein the electric heater is in the form of a wire coil (85).

3. The aerosol provision system of claim 1 or 2, wherein the electric heater is wound around a capillary structure (83) arranged to deliver the aerosol generating material to the electric heater.

4. The aerosol provision system of claim 1, wherein the electric heater is in the form of a track on an electrically insulating substrate (103, 113).

5. The aerosol provision system of any of claims 1 to 4, wherein the thermocouple junction is located nearer to one end of the electric heater than the other.

6. The aerosol provision system of any of claims 1 to 4, wherein the thermocouple junction is located around the middle of the electric heater.

7. The aerosol provision system of any of claims 1 to 6, wherein the first and / or second portion of the electric heater comprises a nickel alloy.

8. The aerosol provision system of any of claims 1 to 7, wherein the first portion of the electric heater comprises an alloy of nickel and chromium.

9. The aerosol provision system of any of claims 1 to 7, wherein the second portion of the electric heater comprises an alloy of nickel, aluminium, manganese and silicon.

10. The aerosol provision system of any of claims 1 to 9, wherein the electric heater has an electrical resistance within a range selected from the group comprising: 0.5 to 2 ohms; 0.8 to 1.8 ohms; 0.9 to 1.7 ohms; 1.0 to 1.6 ohms; 1.1 to 1.5 ohms and 1.2 to 1.4 ohms.

11. The aerosol provision system of any of claims 1 to 10, wherein the control circuitry is configured to supply power to the electric heater during a period of aerosol generation in a pulsed manner that comprises a series of on periods during which power is connected to the electric heater and off periods during power is not connected to the electric heater, and wherein the control circuitry is configured to time the measurements of temperature for the electric heater so they are made during off periods when power is not connected to the electric heater.

12. The aerosol provision system of any of claims 1 to 11, wherein the control circuitry is configured to determine a fault condition for the electronic aerosol provision system has arisen if a measurement of temperature for the electric heater indicates the electric heater temperature is above a predetermined upper temperature threshold and / or if a measurement of temperature for the electric heater indicates the electric heater temperature is below a predetermined lower temperature threshold.

13. The aerosol provision system of any of claims 1 to 12, wherein the aerosol provision system comprises a control unit part (2) and a consumable part (4) detachably couplable to the control unit part, and wherein the control unit part comprises the control circuitry and the consumable part comprises the electric heater.

14. A consumable part (4) for an aerosol provision system comprising:
an electric heater (85, 105, 115) for generating an aerosol from an aerosol generating material for user inhalation, wherein the electric heater comprises a first portion (80, 100, 110) comprising a first electrically resistive material and a second portion (82, 102, 112) comprising a second electrically resistive material which is different from the first electrically resistive material, wherein the first portion and the second portion are connected together so that the electric heater comprises a thermocouple junction (84, 104, 114), and wherein the consumable part further comprises a first connecting lead (86, 106, 116) connected to the first portion of the electric heater, wherein the first connecting lead has an electrical resistance per unit length which is less than an electrical resistance per unit length of the first portion of the electric heater and a second connecting lead (88, 108, 118) connected to the second portion of the electric heater, wherein the second connecting lead has an electrical resistance per unit length which is less than an electrical resistance per unit length of the second portion of the electric heater.

15. A method of operating an aerosol provision system (1) comprising:
providing an electric heater (85, 105, 115) for generating an aerosol from an aerosol generating material for user inhalation, wherein the electric heater comprises a first portion (80, 100, 110) comprising a first electrically resistive material and a second portion (82, 102, 112) comprising a second electrically resistive material which is different from the first electrically resistive material, and wherein the first portion and the second portion are connected together so that the electric heater comprises a thermocouple junction (84, 104, 114),
providing a first connecting lead (86, 106, 116) connected to the first portion of the electric heater, wherein the first connecting lead has an electrical resistance per unit length which is less than an electrical resistance per unit length of the first portion of the electric heater and a second connecting lead (88, 108, 118) connected to the second portion of the electric heater, wherein the second connecting lead has an electrical resistance per unit length which is less than an electrical resistance per unit length of the second portion of the electric heater; and
making measurements of temperature for the electric heater using the thermocouple junction.

## Patentansprüche

1. Aerosolbereitstellungssystem (1), Folgendes umfassend:
eine elektrische Heizung (85, 105, 115) zum Erzeugen eines Aerosols aus einem Aerosolerzeugungsmaterial zur Benutzerinhalation, wobei die elektrische Heizung einen ersten Abschnitt (80, 10, 110), der ein erstes elektrisches Widerstandsmaterial umfasst, und einen zweiten Abschnitt (82, 102, 112) umfasst, der ein zweites elektrisches Widerstandsmaterial umfasst, das von dem ersten elektrischen Widerstandsmaterial verschieden ist, und wobei der erste Abschnitt und der zweite Abschnitt miteinander verbunden sind, so dass die elektrische Heizung einen Thermoelementübergang (84, 104, 114) umfasst;
einen Steuerungsschaltkomplex (20), der eingerichtet ist, um Temperaturmessungen für die elektrische Heizung unter Verwendung des Thermoelementübergangs durchzuführen, und
eine erste Verbindungsleitung (86, 106, 116), die mit dem ersten Abschnitt der elektrischen Heizung verbunden ist, wobei die erste Verbindungsleitung einen elektrischen Widerstand pro Längeneinheit aufweist, der kleiner ist als ein elektrischer Widerstand pro Längeneinheit des ersten Abschnitts der elektrischen Heizung, und eine zweite Verbindungsleitung (98, 108, 118), die mit dem zweiten Abschnitt der elektrischen Heizung verbunden ist, wobei die zweite Verbindungsleitung einen elektrischen Widerstand pro Längeneinheit aufweist, der kleiner ist als ein elektrischer Widerstand pro Längeneinheit des zweiten Abschnitts der elektrischen Heizung.

2. Aerosolbereitstellungssystem nach Anspruch 1, wobei die elektrische Heizung die Gestalt einer Drahtspule (85) aufweist.

3. Aerosolbereitstellungssystem nach Anspruch 1 oder 2, wobei die elektrische Heizung um eine Kapillarstruktur (83) herum gewickelt ist, die eingerichtet ist, um das Aerosolerzeugungsmaterial zu der elektrischen Heizung zu liefern.

4. Aerosolbereitstellungssystem nach Anspruch 1, wobei die elektrische Heizung die Gestalt einer Bahn auf einem elektrisch isolierenden Substrat (103, 113) aufweist.

5. Aerosolbereitstellungssystem nach einem der Ansprüche 1 bis 4, wobei der Thermoelementübergang näher an einem Ende der elektrischen Heizung als an dem anderen angeordnet ist.

6. Aerosolbereitstellungssystem nach einem der Ansprüche 1 bis 4, wobei der Thermoelementübergang um die Mitte der elektrischen Heizung herum angeordnet ist.

7. Aerosolbereitstellungssystem nach einem der Ansprüche 1 bis 6, wobei der erste und/oder der zweite Abschnitt der elektrischen Heizung eine Nickel-Legierung umfasst.

8. Aerosolbereitstellungssystem nach einem der Ansprüche 1 bis 7, wobei der erste Abschnitt der elektrischen Heizung eine Legierung aus Nickel und Chrom umfasst.

9. Aerosolbereitstellungssystem nach einem der Ansprüche 1 bis 7, wobei der zweite Abschnitt der elektrischen Heizung eine Legierung aus Nickel, Aluminium, Mangan und Silizium umfasst.

10. Aerosolbereitstellungssystem nach einem der Ansprüche 1 bis 9, wobei die elektrische Heizung einen elektrischen Widerstand innerhalb eines Bereichs aufweist, der aus der Gruppe ausgewählt ist, die Folgendes umfasst: 0,5 bis 2 Ohm; 0,8 bis 1,8 Ohm; 0,9 bis 1,7 Ohm; 1,0 bis 1,6 Ohm; 1,1 bis 1,5 Ohm und 1,2 bis 1,4 Ohm.

11. Aerosolbereitstellungssystem nach einem der Ansprüche 1 bis 10, wobei der Steuerungsschaltkomplex eingerichtet ist, um der elektrischen Heizung während einer Periode der Aerosolerzeugung in einer gepulsten Weise Strom zuzuführen, die eine Reihe von Einschaltperioden, während der die elektrische Heizung mit Strom verbunden ist, und Ausschaltperioden umfasst, während der die elektrische Heizung nicht mit Strom verbunden ist, und wobei der Steuerungsschaltkomplex eingerichtet ist, um die Temperaturmessungen für die elektrische Heizung zeitlich zu steuern, so dass sie während Ausschaltperioden durchgeführt werden, wenn die elektrische Heizung nicht mit Strom verbunden ist.

12. Aerosolbereitstellungssystem nach einem der Ansprüche 1 bis 11, wobei der Steuerungsschaltkomplex eingerichtet ist, um einen Fehlerzustand für das elektronische Aerosolbereitstellungssystem zu bestimmen, der auftritt, wenn eine Temperaturmessung für die elektrische Heizung angibt, dass die Temperatur der elektrischen Heizung über einem vorbestimmten oberen Temperaturschwellenwert liegt, und/oder wenn eine Temperaturmessung für die elektrische Heizung angibt, dass die Temperatur der elektrischen Heizung unter einem vorbestimmten unteren Temperaturschwellenwert liegt.

13. Aerosolbereitstellungssystem nach einem der Ansprüche 1 bis 12, wobei das Aerosolbereitstellungssystem einen Teil einer Steuerungseinheit (2) und einen Verbrauchsteil (4) umfasst, der abnehmbar an den Teil der Steuerungseinheit koppelbar ist, und wobei der Teil der Steuerungseinheit den Steuerungsschaltkomplex umfasst und der Verbrauchsteil die elektrische Heizung umfasst.

14. Verbrauchsteil (4) für ein Aerosolbereitstellungssystem, Folgendes umfassend:
eine elektrische Heizung (85, 105, 115) zum Erzeugen eines Aerosols aus einem Aerosolerzeugungsmaterial zur Benutzerinhalation, wobei die elektrische Heizung einen ersten Abschnitt (80, 100, 110), der ein erstes elektrisches Widerstandsmaterial umfasst, und einen zweiten Abschnitt (82, 102, 112) umfasst, der ein zweites elektrisches Widerstandsmaterial umfasst, das von dem ersten elektrischen Widerstandsmaterial verschieden ist, wobei der erste Abschnitt und der zweite Abschnitt miteinander verbunden sind, so dass die elektrische Heizung einen Thermoelementübergang (84, 104, 114) umfasst, und wobei der Verbrauchsteil weiterhin eine erste Verbindungsleitung (86, 106, 116), die mit dem ersten Abschnitt der elektrischen Heizung verbunden ist, wobei die erste Verbindungsleitung einen elektrischen Widerstand pro Längeneinheit aufweist, der kleiner ist als ein elektrischer Widerstand pro Längeneinheit des ersten Abschnitts der elektrischen Heizung, und eine zweite Verbindungsleitung (88, 108, 118) umfasst, die mit dem zweiten Abschnitt der elektrischen Heizung verbunden ist, wobei die zweite Verbindungsleitung einen elektrischen Widerstand pro Längeneinheit aufweist, der kleiner ist als ein elektrischer Widerstand pro Längeneinheit des zweiten Abschnitts der elektrischen Heizung.

15. Verfahren zum Betreiben eines Aerosolbereitstellungssystems (1), Folgendes umfassend: Bereitstellen einer elektrischen Heizung (85, 105, 115) zum Erzeugen eines Aerosols aus einem Aerosolerzeugungsmaterial zur Benutzerinhalation, wobei die elektrische Heizung einen ersten Abschnitt (80, 100, 110), der ein erstes elektrisches Widerstandsmaterial umfasst, und einen zweiten Abschnitt (82, 102, 112) umfasst, der ein zweites elektrisches Widerstandsmaterial umfasst, das von dem ersten elektrischen Widerstandsmaterial verschieden ist, und wobei der erste Abschnitt und der zweite Abschnitt miteinander verbunden sind, so dass die elektrische Heizung einen Thermoelementübergang (84, 104, 114) umfasst,
Bereitstellen einer ersten Verbindungsleitung (86, 106, 116), die mit dem ersten Abschnitt der elektrischen Heizung verbunden ist, wobei die erste Verbindungsleitung einen elektrischen Widerstand pro Längeneinheit aufweist, der kleiner ist als ein elektrischer Widerstand pro Längeneinheit des ersten Abschnitts der elektrischen Heizung, und einer zweiten Verbindungsleitung (88, 108, 118), die mit dem zweiten Abschnitt der elektrischen Heizung verbunden ist, wobei die zweite Verbindungsleitung einen elektrischen Widerstand pro Längeneinheit aufweist, der kleiner ist als ein elektrischer Widerstand pro Längeneinheit des zweiten Abschnitts der elektrischen Heizung, und
Durchführen von Temperaturmessungen für die elektrische Heizung unter Verwendung des Thermoelementübergangs.

## Revendications

1. Système de délivrance d'aérosol (1) comprenant :
un élément chauffant électrique (85, 105, 115) destiné à générer un aérosol à partir d'un matériau générateur d'aérosol en vue d'une inhalation par un utilisateur, l'élément chauffant électrique comprenant une première partie (80, 10, 110) comprenant un premier matériau électriquement résistif et une deuxième partie (82, 102, 112) comprenant un deuxième matériau électriquement résistif qui est différent du premier matériau électriquement résistif, et la première partie et la deuxième partie étant reliées ensemble, de sorte que l'élément chauffant électrique comprend une jonction de thermocouple (84, 104, 114) ;
des circuits de commande (20) conçus pour prendre des mesures de température pour l'élément chauffant électrique au moyen de la jonction de thermocouple ; et un premier fil de connexion (86, 106, 116) connecté à la première partie de l'élément chauffant électrique, le premier fil de connexion ayant une résistance électrique par unité de longueur qui est inférieure à une résistance électrique par unité de longueur de la première partie de l'élément chauffant électrique, et un deuxième fil de connexion (98, 108, 118) connecté à la deuxième partie de l'élément chauffant électrique, le deuxième fil de connexion ayant une résistance électrique par unité de longueur qui est inférieure à une résistance électrique par unité de longueur de la deuxième partie de l'élément chauffant électrique.

2. Système de délivrance d'aérosol de la revendication 1, dans lequel l'élément chauffant électrique se présente sous la forme d'une bobine de fil (85).

3. Système de délivrance d'aérosol de la revendication 1 ou 2, dans lequel l'élément chauffant électrique est enroulé autour d'une structure capillaire (83) agencée pour délivrer le matériau générateur d'aérosol à l'élément chauffant électrique.

4. Système de délivrance d'aérosol de la revendication 1, dans lequel l'élément chauffant électrique se présente sous la forme d'une piste sur un substrat électriquement isolant (103, 113).

5. Système de délivrance d'aérosol de l'une quelconque des revendications 1 à 4, dans lequel la jonction de thermocouple se situe plus près d'une extrémité de l'élément chauffant électrique que de l'autre.

6. Système de délivrance d'aérosol de l'une quelconque des revendications 1 à 4, dans lequel la jonction de thermocouple se situe à peu près au centre de l'élément chauffant électrique.

7. Système de délivrance d'aérosol de l'une quelconque des revendications 1 à 6, dans lequel la première et/ou la deuxième partie de l'élément chauffant électrique comprennent un alliage de nickel.

8. Système de délivrance d'aérosol de l'une quelconque des revendications 1 à 7, dans lequel la première partie de l'élément chauffant électrique comprend un alliage de nickel et de chrome.

9. Système de délivrance d'aérosol de l'une quelconque des revendications 1 à 7, dans lequel la deuxième partie de l'élément chauffant électrique comprend un alliage de nickel, d'aluminium, de manganèse et de silicium.

10. Système de délivrance d'aérosol de l'une quelconque des revendications 1 à 9, dans lequel l'élément chauffant électrique a une résistance électrique dans une plage choisie dans le groupe comprenant : 0,5 à 2 ohms ; 0,8 à 1,8 ohm ; 0,9 à 1,7 ohm ; 1,0 à 1,6 ohm ; 1,1 à 1,5 ohm ; et 1,2 à 1,4 ohm.

11. Système de délivrance d'aérosol de l'une quelconque des revendications 1 à 10, dans lequel les circuits de commande sont conçus pour alimenter l'élément chauffant électrique pendant une période de génération d'aérosol d'une manière pulsée qui comprend une série de périodes de marche durant lesquelles l'alimentation est branchée à l'élément chauffant électrique et des périodes d'arrêt durant lesquelles l'alimentation n'est pas branchée à l'élément chauffant électrique, et dans lequel les circuits de commande sont conçus pour minuter les mesures de température pour l'élément chauffant électrique, de sorte qu'elles sont effectuées pendant les périodes d'arrêt lorsque l'alimentation n'est pas branchée à l'élément chauffant électrique.

12. Système de délivrance d'aérosol de l'une quelconque des revendications 1 à 11, dans lequel les circuits de commande sont conçus pour déterminer qu'un état défectueux pour le système électronique de délivrance d'aérosol est survenu si une mesure de température pour l'élément chauffant électrique indique que la température de l'élément chauffant électrique est supérieure à un seuil haut de température prédéterminé et/ou si une mesure de température pour l'élément chauffant électrique indique que la température de l'élément chauffant électrique est inférieure à un seuil bas de température prédéterminé.

13. Système de délivrance d'aérosol de l'une quelconque des revendications 1 à 12, le système de délivrance d'aérosol comprenant une partie unité de commande (2) et une partie consommable (4) pouvant être couplée de façon détachable à la partie unité de commande, et la partie unité de commande comprenant les circuits de commande et la partie consommable comprenant l'élément chauffant électrique.

14. Partie consommable (4) pour un système de délivrance d'aérosol comprenant :
un élément chauffant électrique (85, 105, 115) destiné à générer un aérosol à partir d'un matériau générateur d'aérosol en vue d'une inhalation par un utilisateur, l'élément chauffant électrique comprenant une première partie (80, 100, 110) comprenant un premier matériau électriquement résistif et une deuxième partie (82, 102, 112) comprenant un deuxième matériau électriquement résistif qui est différent du premier matériau électriquement résistif, la première partie et la deuxième partie étant reliées ensemble, de sorte que l'élément chauffant électrique comprend une jonction de thermocouple (84, 104, 114), et la partie consommable comprenant en outre un premier fil de connexion (86, 106, 116) connecté à la première partie de l'élément chauffant électrique, le premier fil de connexion ayant une résistance électrique par unité de longueur qui est inférieure à une résistance électrique par unité de longueur de la première partie de l'élément chauffant électrique, et un deuxième fil de connexion (88, 108, 118) connecté à la deuxième partie de l'élément chauffant électrique, le deuxième fil de connexion ayant une résistance électrique par unité de longueur qui est inférieure à une résistance électrique par unité de longueur de la deuxième partie de l'élément chauffant électrique.

15. Procédé de fonctionnement d'un système de délivrance d'aérosol (1) comprenant :
l'obtention d'un élément chauffant électrique (85, 105, 115) destiné à générer un aérosol à partir d'un matériau générateur d'aérosol en vue d'une inhalation par un utilisateur, l'élément chauffant électrique comprenant une première partie (80, 100, 110) comprenant un premier matériau électriquement résistif et une deuxième partie (82, 102, 112) comprenant un deuxième matériau électriquement résistif qui est différent du premier matériau électriquement résistif, et la première partie et la deuxième partie étant reliées ensemble, de sorte que l'élément chauffant électrique comprend une jonction de thermocouple (84, 104, 114) ;
l'obtention d'un premier fil de connexion (86, 106, 116) connecté à la première partie de l'élément chauffant électrique, le premier fil de connexion ayant une résistance électrique par unité de longueur qui est inférieure à une résistance électrique par unité de longueur de la première partie de l'élément chauffant électrique, et un deuxième fil de connexion (88, 108, 118) connecté à la deuxième partie de l'élément chauffant électrique, le deuxième fil de connexion ayant une résistance électrique par unité de longueur qui est inférieure à une résistance électrique par unité de longueur de la deuxième partie de l'élément chauffant électrique ; et
la prise de mesures de température pour l'élément chauffant électrique au moyen de la jonction de thermocouple.
